# EUROPÄISCHE PATENTSCHRIFT

(11) **EP 4 079 618 B1**
(45) Veröffentlichungstag und Bekanntmachung des Hinweises auf die Patenterteilung: **02.10.2024**
(21) Anmeldenummer: 22165793.5
(22) Anmeldetag: 31.03.2022
(51) Int. Cl.: B62L 3/02, B60T 8/92

(54) **VERFAHREN UND EINRICHTUNG ZUM STEUERN DES BETRIEBS EINER HYDRAULISCHEN BREMSANLAGE, HYDRAULISCHE BREMSANLAGE SOWIE FAHRZEUG**
METHOD AND DEVICE FOR CONTROLLING THE OPERATION OF A HYDRAULIC BRAKE SYSTEM, HYDRAULIC BRAKE SYSTEM AND VEHICLE
PROCÉDÉ ET DISPOSITIF DE COMMANDE DU FONCTIONNEMENT D'UNE INSTALLATION HYDRAULIQUE DE FREINAGE; INSTALLATION HYDRAULIQUE DE FREINAGE; AINSI QUE VÉHICULE

(30) Priorität: 22.04.2021 DE 102021204017
(43) Veröffentlichungstag der Anmeldung: 26.10.2022
(73) Patentinhaber: Robert Bosch GmbH, 70442 Stuttgart (DE)
(72) Erfinder: Maier, Oliver, 70186 Stuttgart (DE); Widmaier, Georg, 71229 Leonberg (DE); Nakamura, Atsushi, Niigata-Shi, 950-0327 (JP); Wienss, Andreas, 72800 Eningen Unter Achalm (DE)

(56) Entgegenhaltungen:
- DE-A1- 102016 207 751
- DE-A1- 102019 219 939

## Beschreibung

### Stand der Technik

Die vorliegende Erfindung betrifft ein Verfahren und eine Einrichtung zum Steuern des Betriebs einer hydraulischen Bremsanlage eines Fahrzeugs sowie eine hydraulische Bremsanlage und Fahrzeug als solches. Das Fahrzeug kann ein mit Muskelkraft und/oder - insbesondere zusätzlich - mit Motorkraft antreibbares Fahrzeug sein, zum Beispiel, aber nicht nur, ein Elektrofahrrad, ein eBike, ein Pedelec oder dergleichen. Derartige Verfahren und Einrichtungen sind beispielsweise aus DE 10 2019 219939 A1 und DE 10 2016 207751 A1 bekannt.

Im Fahrzeugbereich allgemein und im Bereich mit Muskelkraft und/oder - insbesondere zusätzlich - mit Motorkraft antreibbarer Fahrzeuge, bei eBikes, Pedelecs und dergleichen werden vermehrt hydraulische Bremsanlagen eingesetzt. Bei diesen werden dann oft auch ABS-Funktionen realisiert. Beim Aktivieren der ABS-Funktion wird Bremsflüssigkeit aus dem Radzylinder über einen Sekundärkreis in ein Aufnahmegefäß, den so genannten Akkumulator, eingeleitet und dort zwischengespeichert. Die im Akkumulator zwischengespeicherte Bremsflüssigkeit muss zu einem späteren Zeitpunkt wieder in das Vorratsgefäß oder Reservoir der Gebereinheit oder des Geberzylinders am Bremsgriff oder dergleichen zurückgeführt werden. Für die Rückführung der Bremsflüssigkeit in das Vorratsgefäß oder Reservoir sind herkömmlicherweise zusätzliche Komponenten im Sekundärkreis der Bremsanlage erforderlich, die Bauraum, Gewicht und Kosten der gesamten Bremsanlage steigern.

### Offenbarung der Erfindung

Das in dem unabhängigen Anspruch 1 definierte und erfindungsgemäße Steuerverfahren für eine hydraulische Bremsanlage weist demgegenüber den Vorteil auf, dass Bremsflüssigkeit zuverlässig über den Primärkreis der Bremsanlage und somit ohne Rückförderpumpe und/oder Rückschlagventil eines Sekundärkreises in das Reservoir des Geberzylinders zurückgeführt werden kann. Dies wird erfindungsgemäß dadurch erreicht, dass ein Verfahren zum Steuern des Betriebs einer hydraulischen Bremsanlage eines Fahrzeugs und insbesondere eines mit Muskelkraft und/oder - insbesondere zusätzlich - mit Motorkraft antreibbaren Fahrzeugs, eines Elektrofahrrads, eBikes, Pedelecs oder dergleichen geschaffen wird, bei welchem geprüft wird, ob eine Entleerungsbedingung zum Entleeren eines Akkumulators der Bremsanlage erfüllt ist, und - wenn die Entleerungsbedingung erfüllt ist - zunächst ein steuerbares Einlassventil in einem Primärkreis der Bremsanlage über ein vorgegebenes Tastverhältnis, insbesondere von 10 %, und/oder für eine vorgegebene erste Zeitspanne in einen teilweise geschlossenen Zustand gesetzt wird und dann ein Auslassventil des Akkumulators - zusammenhängend oder intervallweise - für eine vorgegebene zweite Zeitspanne geöffnet wird, so dass Bremsflüssigkeit aus dem Akkumulator über das Auslassventil, das Einlassventil und den Primärkreis in ein Reservoir eines Geberzylinders oder einen Geberzylinder des Primärkreises entleert wird. Durch diese Maßnahmen wird erreicht, dass ohne die Notwendigkeit eines Sekundärkreises mit Rückführpumpe und/oder Rückschlagventil Bremsflüssigkeit aus dem Akkumulator in den Bereich des Bremsgebers und insbesondere in ein Reservoir eines Geberzylinders oder den Geberzylinder zurückgeführt werden kann. Dadurch werden Bauraum, Gewicht und Kosten bei einer zu Grunde liegenden Bremsanlage reduziert.

Ein Kern der Erfindung besteht also in einer besonders geeigneten Routine oder Anordnung von Verfahrensschritten zur Entleerung (englisch: discharge) eines Akkumulators (englisch: accumulator) eine hydraulischen Bremsanlage, deswegen wird nachfolgend auch von einem ADR-Verfahren oder kurz vom ADR (englisch: Accumulator Discharge Routine) gesprochen.

Angewandt werden kann die vorliegende Erfindung insbesondere auch im Bereich motorisierter Zweiräder, Kleinkrafträder und von Schmalspurfahrzeugen. Die Unteransprüche zeigen bevorzugte Weiterbildungen der Erfindung.

Die Werte der ersten und zweiten Zeitspannen können als Grenzwerte oder Schwellenwerte vorzugsweise von Werten eines oder mehrerer der folgenden Parameter oder Größen abhängig gewählt und eingestellt werden: (1) der Akkumulatorfüllung, z.B. geschätzt oder bestimmt durch ein bereits existentes Softwaremodul, (2) einer Anbauposition, insbesondere einer Höhendifferenz zwischen einem Geber und einem ABS-Steuergerät, (3) einem Strömungswiderstand, insbesondere definiert durch Bremsleitungslänge und Temperatur, (4) Werten zu einer oder mehreren Eigenschaften der Bremsflüssigkeitseigenschaft, z.B. der Viskosität und der Temperatur.

Bei einer bevorzugten Ausgestaltungsform des erfindungsgemäßen Steuerverfahrens für den Betrieb einer hydraulischen Bremsanlage wird insbesondere eine Bremsanlage verwendet wird,
(i) die mit dem Primärkreis ausgebildet ist, welcher stromaufwärts gelegen einen Bremsgeber, den Geberzylinder mit Reservoir für Bremsflüssigkeit und stromabwärts gelegen einen Radzylinder zur Betätigung einer Radbremse aufweist,
(ii) die im Primärkreis eine Bremsleitung aufweist, durch welche der Geberzylinder und der Radzylinder über das steuerbare Einlassventil in der Bremsleitung miteinander verbunden sind und werden, und
(iii) die mit einem Akkumulatorkreis ausgebildet ist, welcher stromabwärts vom Einlassventil an einem Abzweigungspunkt oder einer Abzweigungsstelle aus der Bremsleitung mit einer Akkumulatorleitung abzweigt und endständig den Akkumulator zur steuerbaren Aufnahme von Bremsflüssigkeit mit dem steuerbaren Auslassventil zwischen dem Abzweigungspunkt und dem Akkumulator aufweist.

Es sind unterschiedliche Teilbedingungen denkbar, die nachfolgend - jedoch nicht abschließend - aufgeführt sind und erfindungsgemäß einzeln oder in beliebiger logischer Kombination miteinander zu einer Entleerungsbedingung für das ADR-Verfahren verknüpft werden können, die festlegt, unter welchen Umständen das ADR-Verfahren ausgeführt wird.

So ist gemäß bevorzugten Weiterbildung des erfindungsgemäßen Verfahrens die Entleerungsbedingung erfüllt, wenn ein Druck der Bremsflüssigkeit im Primärkreis oder Primärzweig mit einem atmosphärischen Umgebungsdruck übereinstimmt oder dessen Wert annimmt oder alternativ oder zusätzlich unterhalb eines vorgegebenen Schwellenwerts liegt.

Weiterhin ist es gemäß einem alternativen oder zusätzlichen Ausführungsbeispiel der vorliegenden Erfindung denkbar, dass die Entleerungsbedingung erfüllt ist, wenn - gegebenenfalls zusätzlich oder alternativ - zeitlich unmittelbar vorangehend ein Füllstand des Akkumulators einen vorgegebenen Wert überschreitet, also insbesondere einen Mindestfüllstand erreicht hat.

Gemäß einer anderen Ausführungsform des erfindungsgemäßen Verfahrens ist die Entleerungsbedingung erfüllt, wenn - gegebenenfalls zusätzlich oder alternativ - zeitlich unmittelbar vorangehend die Bremsanlage mit einem ABS-Vorgang betrieben wurde, bei welchem - insbesondere mindestens einmal - ein Druckabfall im Radzylinder und/oder in einem stromabwärts gelegenen Teil des der Bremsleitung mit Aufnahme von Bremsflüssigkeit im Akkumulator bewirkt wurde.

Des Weiteren kann daran gedacht werden, dass gemäß einer anderen Weiterbildung des erfindungsgemäßen Verfahrens die Entleerungsbedingung erfüllt ist, wenn - gegebenenfalls zusätzlich oder alternativ - das zu Grunde liegende Fahrzeug und/oder die Bremsanlage neu gestartet und/oder von einem Ruhezustand in einen aktivierten Zustand versetzt werden oder wurden.

Für ein besonders hohes Maß an Zuverlässigkeit ist bei einer anderen Ausgestaltungsform des erfindungsgemäßen Verfahrens die Entleerungsbedingungen erfüllt, wenn - gegebenenfalls zusätzlich oder alternativ - seit einem letzten Zeitpunkt, bei dem die Entleerungsbedingung erfüllt war, eine vorgegebene Zeitspanne verstrichen ist und/oder eine vorgegebene Anzahl von Bremsvorgängen mit der Bremsanlage, insbesondere gewichtet über die Stärke und/oder Zeitspanne der Bremsvorgänge, ausgeführt wurde, insbesondere ohne dass währenddessen ein ABS-Vorgang mit der Bremsanlage ausgeführt wurde.

Auch bietet es sich aus Gründen einer geräuschsensitiven Umsetzung der Erfindung an, das Ausführen des ADR-Verfahrens von der Geschwindigkeit des zu Grunde liegenden Fahrzeugs abhängig zu machen, so dass die Entleerungsbedingungen erfüllt ist, wenn - insbesondere zusätzlich oder alternativ - die Geschwindigkeit des zu Grunde liegenden Fahrzeugs einen vorgegebenen Grenzwert v_{G} überschreitet.

Der Grenzwert oder Schwellenwert kann vorzugsweise von Werten eines oder mehrerer der folgenden Parameter oder Größen abhängig gewählt und eingestellt werden: (1) der Akkumulatorfüllung, z.B. geschätzt oder bestimmt durch ein bereits existentes Softwaremodul, (2) einer Anbauposition, insbesondere einer Höhendifferenz zwischen einem Geber und einem ABS-Steuergerät, (3) einem Strömungswiderstand, insbesondere definiert durch Bremsleitungslänge und Temperatur, (4) Werten zu einer oder mehreren Eigenschaften der Bremsflüssigkeitseigenschaft, z.B. der Viskosität und der Temperatur.

Ferner betrifft die vorliegende Erfindung eine Einrichtung zum Steuern des Betriebs einer hydraulischen Bremsanlage eines Fahrzeugs und insbesondere eines mit Muskelkraft und/oder - insbesondere zusätzlich - mit Motorkraft antreibbaren Fahrzeugs, eines Elektrofahrrads, eBikes, Pedelecs oder dergleichen. Diese Einrichtung ist ausgebildet und/oder weist Mittel auf, eine Ausführungsform des erfindungsgemäßen Verfahrens zu veranlassen, auszuführen und/oder zu steuern.

Ferner ist Gegenstand der vorliegenden Erfindung eine Bremsanlage eines Fahrzeugs und insbesondere eines mit Muskelkraft und/oder - insbesondere zusätzlich - mit Motorkraft antreibbaren Fahrzeugs, insbesondere eines Elektrofahrrads, eBikes, Pedelecs oder dergleichen. Die Bremsanlage ist eingerichtet ist und weist Mittel derart auf, dass eine Ausführungsform des erfindungsgemäßen Verfahrens veranlasst, ausgeführt oder gesteuert wird oder werden kann und/oder dass die Bremsanlage bei einem derartigen Verfahren verwendet werden kann. Dabei weist die Bremsanlage die erfindungsgemäße Einrichtung zum Steuern auf. Bei einer vorteilhaften Ausführungsform ist die Bremsanlage mit einem Primärkreis ausgebildet, welcher stromaufwärts gelegen einen Bremsgeber, einen Geberzylinder mit Reservoir und stromabwärts gelegenen einen Radzylinder zur Betätigung einer Radbremse aufweist.

Zusätzlich oder alternativ ist im Primärkreis eine Bremsleitung ausgebildet, durch welche der Geberzylinder und der Radzylinder über ein steuerbares Einlassventil in der Bremsleitung miteinander verbunden sind.

Ferner ist zusätzlich oder alternativ ein Akkumulatorkreis ausgebildet, welcher stromabwärts vom Einlassventil an einem Abzweigungspunkt aus der Bremsleitung mit einer Akkumulatorleitung abzweigt und endständig einen Akkumulator zur steuerbaren Aufnahme von Bremsflüssigkeit mit einem steuerbaren Auslassventil zwischen dem Abzweigungspunkt und dem Akkumulator aufweist.

Auch ein Fahrzeug und insbesondre ein mit Muskelkraft und/oder - insbesondere zusätzlich - mit Motorkraft antreibbares Fahrzeug, ein Elektrofahrrad, eBike, Pedelec oder dergleichen sind Gegenstand der vorliegenden Erfindung. Diese Fahrzeuge weisen eine erfindungsgemäß ausgestaltete Bremsanlage zum Bremsen eines Aggregats des jeweiligen Fahrzeugs und insbesondere eines Rads auf.

### Kurzbeschreibung der Figuren

Unter Bezugnahme auf die beigefügten Figuren werden Ausführungsformen der Erfindung im Detail beschrieben.
- Figur 1: zeigt schematisch eine herkömmliche hydraulische Bremsanlage.
- Figuren 2 und 3: zeigen die herkömmliche hydraulische Bremsanlage aus Figur 1 in einem gebremsten Zustand mit ABS-Betrieb bzw. in einem Zustand mit Entleerung des Akkumulators in herkömmlicher Form über den Sekundärkreis mit Rückschlagventil.
- Figur 4: zeigt schematisch eine erfindungsgemäß ausgestaltete Bremsanlage, welche mit Ausführungsformen des erfindungsgemäßen Verfahrens zum Steuern verwendet werden kann.
- Figur 5: erläutert in schematischer Form den erfindungsgemäßen Vorgang des Entleerens des Akkumulators bei einer Ausführungsform der erfindungsgemäßen Bremsanlage aus Figur 4.
- Figuren 6 bis 8: zeigen in Form von Graphen verschiedene Szenarien, die bei Ausführungsformen des erfindungsgemäßen Verfahrens zum Steuern einer Bremsanlage zum Tragen kommen können.

### Bevorzugte Ausführungsformen der Erfindung

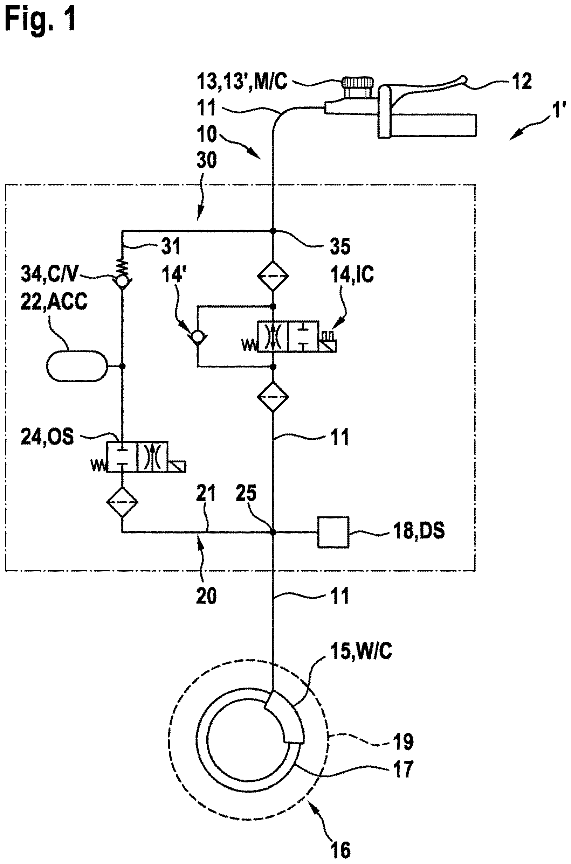

Nachfolgend werden unter Bezugnahme auf die Figuren 1 bis 9 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

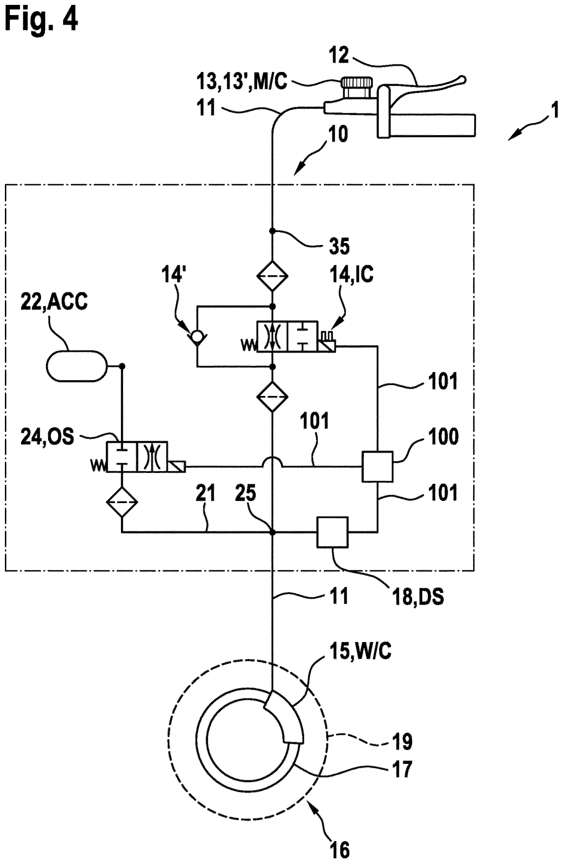

Nachfolgend wird unter Bezugnahme auf die Figuren 4 bis 9 die vorliegende Erfindung im Hinblick auf Konfiguration und Funktion erläutert und in Bezug gesetzt zu herkömmlichen Bremsanlagen und deren Betrieb, wie sie im Zusammenhang mit den Figuren 1 bis 3 dargestellt sind.

Dazu zeigt Figur 4 schematisch eine erfindungsgemäß ausgestaltete Bremsanlage 1, welche mit Ausführungsformen des erfindungsgemäßen Verfahrens zum Steuern verwendet werden kann.

Diese herkömmliche Bremsanlage weist einen Primärzweig 10 oder Primärkreis 10 mit einem in Bezug auf ein vorgesehenes Bremsfluid stromabwärts endständig ausgebildeten Radzylinder 15, W/C, welcher über eine Bremsleitung 11 zur Betätigung einer Bremse oder Radbremse 16 für einen Eingriff an eine Bremsscheibe 17 eines zu bremsenden Rads 19 mit dem Bremsfluid aus einem stromaufwärts endständig angeordneten Bremsgeber 12 mit Bremszylinder 13 oder Masterzylinder M/C und Reservoir 13` beaufschlagbar ist.

In der Bremsleitung 11 ist ein steuerbares Einlassventil 14, IC (IC: inlet continous valve) ausgebildet, von welchem sich stromabwärts gelegenen an einem Abzweigungspunkt 25 ein Drucksensor 18, DS befindet.

Ebenfalls am Abzweigungspunkt 25, also zwischen dem Einlassventil 14 und dem Radzylinder 15, entspringt der Akkumulatorzweig 20 oder Akkumulatorkreis 20 mit einer Akkumulatorleitung 21, einem in der Akkumulatorleitung 21 ausgebildeten Auslassventil 24, OS (OS : outlet switch valve) und einem in der Akkumulatorleitung 21 stromaufwärts und endständig gelegenen Akkumulator 22, ACC zur steuerbaren Aufnahme von Bremsfluid aus dem Radzylinder 15 zur Realisierung einer ABS-Funktion durch erzwungenen Druckabfall im Radzylinder 15.

Des Weiteren ist für den Betrieb eine Steuereinrichtung 100 über entsprechende Erfassung- und/oder Steuerleitungen mit dem Einlassventil 14, IC, dem Drucksensor 18, und dem Auslassventil 24, OS wirkverbunden.

Die Figur 1 zeigt im Vergleich dazu eine herkömmliche Bremsanlage 1`. Diese weist zusätzlich zu den in Bezug auf die erfindungsgemäße Bremsanlage 1 in Figur 4 dargestellten Komponenten einen Sekundärzweig 30 oder Sekundärkreis 30 mit Sekundärleitung 31 und Einmündungspunkt 35 zur Einmündung in die Bremsleitung 11 auf. Die Sekundärleitung 31 ist über den Einmündungspunkt 35 stromabwärts gelegen mit der Akkumulatorleitung 21 fluidmechanisch verbunden und weist stromabwärts zum Einmündungspunkt 35 gelegen ein Rückschlagventil 34, C/V auf.

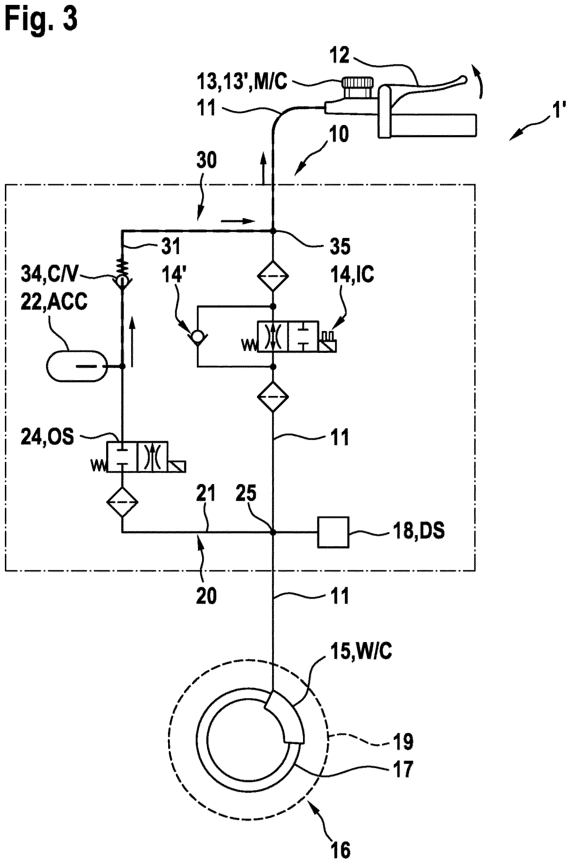

Herkömmlicherweise ist dieses Rückschlagventil 34, C/V für die in Figur 3 dargestellte Entleerung des Akkumulators 22 über den Sekundärzweig 30, den Einmündungspunkt 35 und den stromaufwärts gelegenen Teil der Bremsleitung 11 erforderlich, nimmt jedoch Bauraum ein, und bringt zusätzliches Gewicht und entsprechende Kosten mit sich.

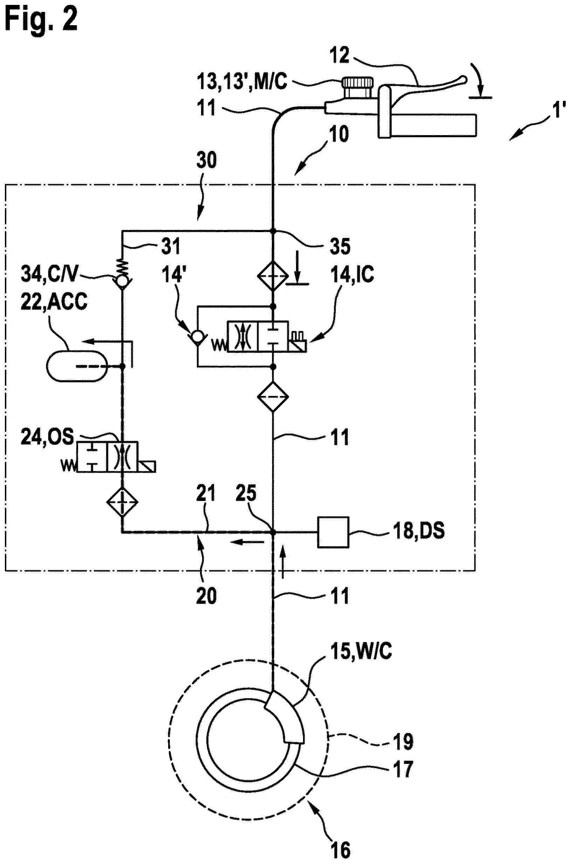

Demgegenüber kann erfindungsgemäß - wie das in Figur 4 dargestellt ist - bei der vorliegenden Erfindung der herkömmlich erforderlich Sekundärkreis 30 aus den Figuren 1 bis 3 entfallen, wobei die Entleerung des Akkumulators 22 durch das erfindungsgemäß vorgesehene ADR-Verfahren über denselben fluidmechanischen Pfad erfolgt, wie er herkömmlicherweise (und auch bei der Erfindung) zum Bremsen und für den ABS-Betrieb gemäß Figur 2 verwendet wird.

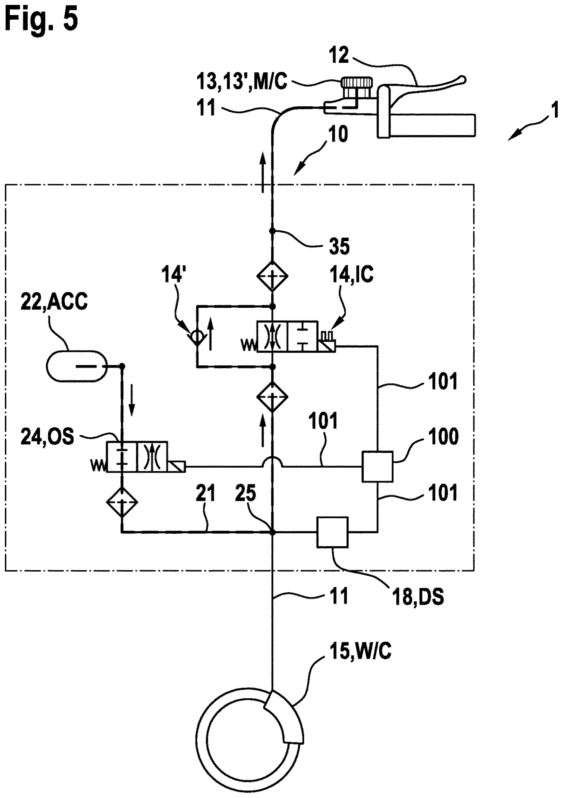

Das erfindungsgemäße ADR-Verfahren und somit die erfindungsgemäße Prozedur für das Entleeren des Akkumulators 22, ACC sind im Zusammenhang mit Figur 5 dargestellt.

Kernidee ist dabei, dass im drucklosen Fall des Primärzweigs 10 oder Primärkreises 10, wenn der Druck des Bremsfluids dort verschwindet oder hinreichend gering ist, das im Akkumulator 22, ACC gesammelte Bremsfluid über die Akkumulatorleitung 21 und den vom Abzweigungspunkt 25 stromaufwärts gelegenen Teil der Bremsleitung 11 unter teilweise geschlossenem Einlassventil 14, IC und/oder zu dessen Umgehung über ein Rückschlagventil 14' in den Geberzylinder 13, M/C und dessen Reservoir 13` zurückgeführt wird.

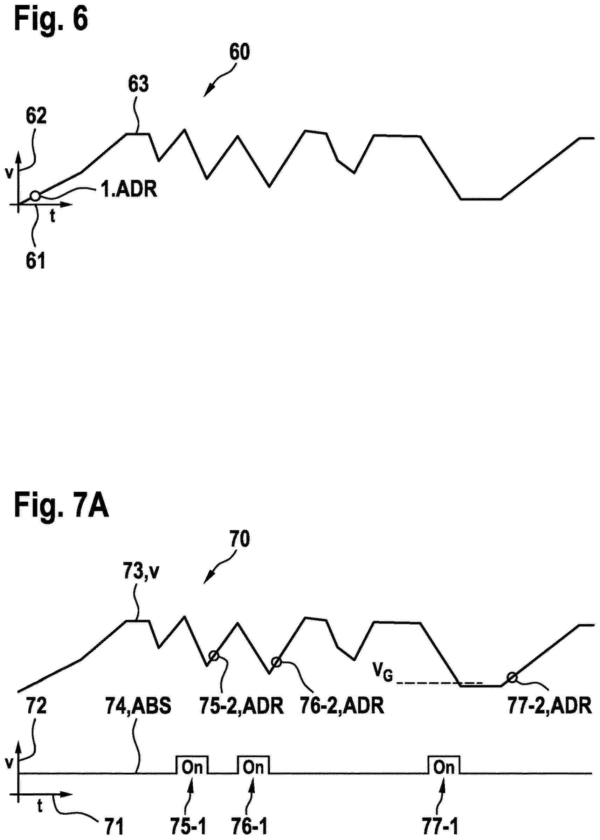

Die Figuren 6 bis 8 zeigen in Form von Graphen verschiedene Szenarien, die bei Ausführungsformen des erfindungsgemäßen Verfahrens zum Steuern einer erfindungsgemäßen Bremsanlage 1 zum Tragen kommen können.

Im Graphen 60 der Figur 6 mit der Spur 63 ist auf der Abszisse 61 der Verlauf der Zeit t und auf der Ordinate 62 die Fahrzeuggeschwindigkeit v als Funktion der Zeit t dargestellt. Eingezeichnet bei 64 ist derjenige Zeitpunkt t1, bei welchem nach dem Starten des Fahrzeugs und der erfindungsgemäßen Bremsanlage 1 zum Zeitpunkt t = 0 das erfindungsgemäße ADR-Verfahren zum ersten Mal ausgeführt wird, wobei nach dem Betriebsbeginn insbesondere eine gewisse Grenz- oder Mindestgeschwindigkeit v_{G} des Fahrzeugs erreicht sein muss, damit mögliche Betriebsgeräusche beim Schalten der Ventile 14, 24 für den Benutzer vom Fahrgeräusch überdeckt werden.

Figur 7A beschreibt in Form eines Graphen 70 mit auf der Abszisse 71 aufgetragener Zeit t und auf der Ordinate 72 für die Spur 73 aufgetragener Fahrzeuggeschwindigkeit v und für die Spur 74 aufgetragener ABS-Aktivierung verschiedene Szenarien des erfindungsgemäßen ADR-Verfahrens.

Im Zusammenhang mit den Aktivierungen 75-1 und 76-1 des ABS-Systems erfolgt unmittelbar nach einer jeweiligen ABS-Aktivierung 75-1, 76-1 an den Punkten 75-2 bzw. 76-2 die entsprechende Entleerung des Akkumulators 22, ACC, das heißt also zeitlich unmittelbar nach einer jeweiligen ABS-Aktivierung 75-1, 76-1.

Mit der Aktivierung 77-1 für das ABS-System ist im Zusammenhang zu sehen, dass der entsprechende ADR-Vorgang 77-2 erst initiiert wird, wenn die Fahrzeuggeschwindigkeit v einen vorbestimmten Schwellwert v_{G} überschritten hat. Diese Bedingung ist an den Punkten 75-2 bzw. 76-2 für die entsprechenden Entleerungen des Akkumulators 22, ACC ebenfalls erfüllt.

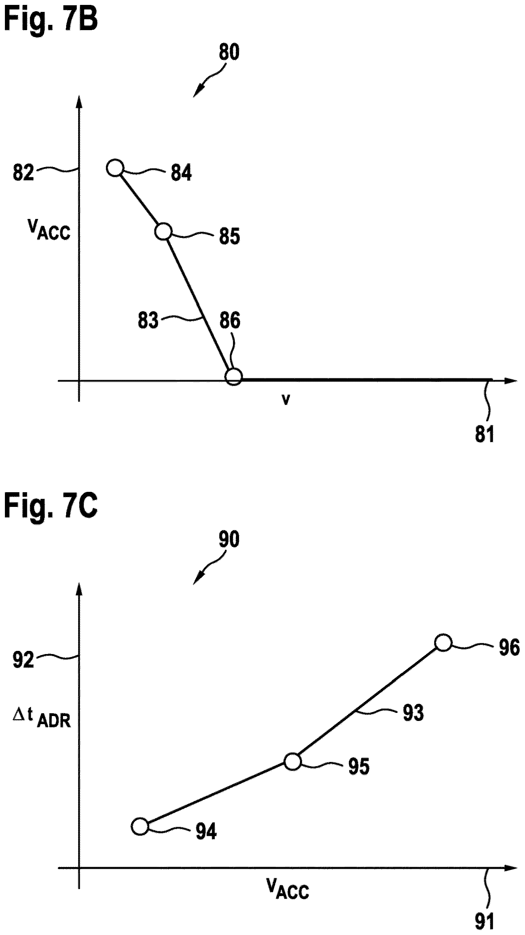

Der Graph 80 aus Figur 7B beschreibt mit auf der Abszisse 81 aufgetragener Fahrzeuggeschwindigkeit v und auf der Ordinate 82 aufgetragenem Akkumulatorvolumen V_{ACC} in der Spur 83 den entsprechenden Wirkzusammenhang über Einstellungen mit Wertepaaren 84, 85 und 86 mit entsprechenden Werten.

Entsprechend zeigt der Graph 90 aus Figur 7C mit der Spur 93 und auf der Abszisse 91 aufgetragenem Akkumulatorvolumen V_{ACC} und auf der Ordinate 92 aufgetragener ADR-Zeitspanne Δt_{ADR} den entsprechenden Zusammenhang mit Wertepaaren 94, 95 und 96 und entsprechenden Werten.

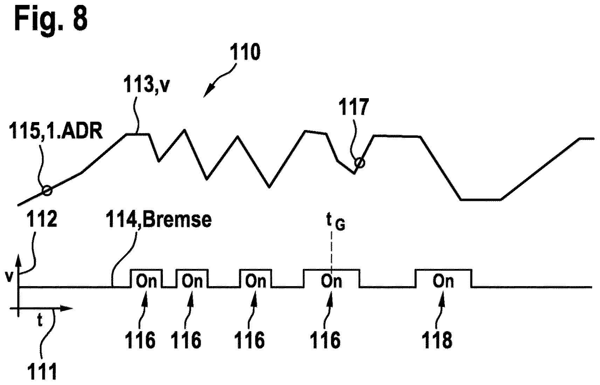

Figur 8 mit der Spur 113 für den Verlauf der Fahrzeuggeschwindigkeit v und der Spur 114 für die normale Bremsaktivierung und auf der Abszisse 111 aufgetragener Zeit t und auf der Ordinate 112 aufgetragener Fahrzeuggeschwindigkeit v bzw. normaler Bremsaktivierung, dass bei 115, also nach dem Einschalten, dass ADR-Verfahren das erste Mal durchlaufen wird, und dass nach einer vorbestimmten Zeitspanne t_{G} als Grenzwert mit normalen Bremsaktivitäten 116 ein so genanntes Langzeit-ADR bei 117 erfolgt, wobei beim normalen Bremsen bei 118 der Wert für das Langzeit-ADR bereits zurückgesetzt ist.

Diese und weitere Merkmale und Eigenschaften der vorliegenden Erfindung werden an Hand der folgenden Darlegungen weiter erläutert:
Herkömmlicherweise kann zwar bei einer hydraulischen Bremsanlage 1' die Rückführung von Bremsflüssigkeit aus dem Akkumulator 22, ACC in das Reservoir 13' am Masterzylinder 13, M/C auch ohne das Erfordernis einer Rückführpumpe realisiert werden, jedoch ist dann ein Sekundärkreis oder Sekundärzweig 30 in der herkömmlichen Bremsanlage 1' mit einem Rückschlagventil 34, C/V (C/V: check valve) erforderlich, wodurch sich Steigerungen in Bauraum, Gewicht und Kosten ergeben. Eine derartige herkömmlich betriebene Bremsanlage 1' ist im Zusammenhang mit Figur 1 dargestellt.

Der Verzicht auf eine Rückförderpumpe hat zur Folge, dass die nach einem Bremsdruckabbau am Radzylinder 15, W/C (W/C: wheel caliper) in den hydraulischen Akkumulator 22, ACC geströmte Bremsflüssigkeit zunächst im Akkumulator 22, ACC verbleibt, wie dies in Figur 2 im Zusammenhang mit einer herkömmlichen Bremsanlage 1' unter Verwendung eines herkömmlichen Steuerverfahrens gezeigt ist.

Die Bremsflüssigkeit wird also nicht im sich anschließenden Bremsdruckaufbau durch eine Rückförderpumpe in den Primärkreis 10 zurückgeschoben. Erst, wenn der Primärkreis 10 drucklos ist, d.h. wenn zum Beispiel der Fahrer den Bremshebel 12 losgelassen hat, fließt die Bremsflüssigkeit, bedingt durch eine Druck- und Luftfeder im Akkumulator 22, ACC sowie durch die Fluidkompression im Sekundärkreis 30, über das Rückschlagventil 34, C/V zurück in den Primärkreis 10 und das Reservoir 13' im Bereich des Masterzylinders 13, M/C, wie dies im Zusammenhang mit Figur 3 für eine herkömmliche Bremsanlage 1' unter Verwendung eines herkömmlichen Steuerverfahrens dargestellt ist.

Wünschenswert wäre es, im Zusammenhang mit hydraulischen Bremsanlagen aus Gründen der Einsparung an Bauraum, Gewicht und Kosten auf das Rückschlagventil 34, C/V und den entsprechenden Zweig des Sekundärkreises 30 der Bremsanlage 1' zu verzichten, ohne dass die Rückführung der Bremsflüssigkeit durch andere zusätzliche Komponenten realisiert werden muss.

Es ist daher ein Kernaspekt der vorliegenden Erfindung, die verbleibenden Komponenten im Zusammenhang mit dem Akkumulator 22, ACC und den Primärkreis 10 einer hydraulischen Bremsanlage 1 in ihren Betrieb so zu steuern, dass trotz des Verzichts auf Rückförderpumpe und Rückschlagventil 34, C/V die Rückführung der Bremsflüssigkeit zuverlässig über den Primärkreis 10 der Bremsanlage 1 erfolgen kann.

Diese Grundidee ist schematisch im Zusammenhang mit den Figuren 4 und 5 dargestellt, wobei Figur 4 die verbleibenden strukturellen Komponenten, d.h. unter Fortlassung einer Rückführpumpen und des Rückschlagventils 34, C/V aus herkömmlichen Anordnungen zeigt und in Figur 5 zusätzlich der Rückstrom der Bremsflüssigkeit aus dem Akkumulator 22, ACC über den Primärkreis 10 in das Reservoir 13' des Masterzylinders 13 erläutert.

Insbesondere ist eine Kernidee der vorliegenden Erfindung, die Entleerung des Akkumulators 22, ACC durch eine entsprechende SW-Routine, aufgefasst als erfindungsgemäßes Verfahren zum Steuern der Bremsanlage 1, zu ersetzen, nämlich um die Steuerung der Komponenten im Zusammenhang mit dem Akkumulator 22, ACC und den Primärkreis 10 zu realisieren.

Das erfindungsgemäß vorgeschlagene Verfahren wird vorangehend und nachfolgend auch als "Akkumulatorentladeverfahren", als "Accumulator Discharge Routine" oder kurz als ADR-Verfahren oder ADR bezeichnet.

Ein Vorteil des erfindungsgemäßen Vorgehens, nämlich des Ersetzens des Sekundärkreises 30 oder eines Teils davon durch eine entsprechende Steuerung des Akkumulators 22, ACC und des Primärkreise 10, ist - gemeinsam mit weiteren Maßnahmen - eine deutlich kleinere und leichtere Bauweise der Hydraulikeinheit HU sowie eine Kosteneinsparung, insbesondere durch den Entfall des Rückschlagventils C/V im herkömmlichen Sekundärkreis 30.

Eine Kernidee des ADR-Verfahrens besteht darin, den Akkumulator 22, ACC auf die gleiche Weise zu entladen, wie er geladen oder aufgeladen wurde.

Daher besteht das erfindungsgemäße Vorgehen des ADR-Verfahrens unter anderem darin, in geeigneter Weise das Auslassschaltventil oder Auslassventil 24, OS im Akkumulatorzweig oder -kreis 20 und das Einlassventil 14, IC im Primärzweig 10 der Bremsanlage 1 in einem drucklosen oder im Wesentlichen drucklosen Zustand mit einer geeigneten Ansteuerung temporär zu öffnen.

Die wichtigste Randbedingung für das erfindungsgemäße ADR-Verfahren ist ein druckloser oder im Wesentlichen druckloser Primärkreis 10. Ein druckloser Primärkreis 10 kann zum Beispiel durch eine Auswertung von Drucksensorinformationen über einen Drucksensor 18, DS auf der W/C-Seite erkannt werden.

Da der Fahrer die Bremse 12 jederzeit wieder betätigen kann, ist es wichtig sicherzustellen, dass während einer solchen erneuten Bremssituation kein Bremsfluid in den Akkumulator ACC fließt, da das OS-Ventil geöffnet ist. Dies wird erreicht, indem das Einlassventil 14, IC bei einer bevorzugten Ausführungsform des erfindungsgemäßen Verfahrens nur teilweise geöffnet wird, also entsprechend auch teilweise geschlossen bleibt, während das ADR-Verfahren läuft.

Das Einlassventil 14, IC wird nur teilweise geöffnet bzw. bleibt somit teilweise geschlossen, indem ein entsprechend bestimmtes Tastverhältnis für die PWM-Steuerung des Einlassventils 14, IC angewendet wird. Die Tastschwelle wird festgelegt basierend auf einem Kompromiss zwischen
- einem Vermeiden eines hohen Volumenstroms zur W/C-Seite und damit zum Akkumulator 22, ACC und
- einem Unterbremsen des Rades 19 aufgrund eines geringen Volumenstroms zur W/C-Seite und damit eines verzögerten Druckanstiegs.

Figur 5 beschreibt zusammenfassend die Ansteuerung der Ventile 24, OS und 14, IC und den daraus resultierenden Volumenstrom in einem im Primärkreis 10 der Bremsanlage 1 drucklosen Zustand und zeigt somit die Wirkzusammenhänge während einer Akkumulatorentleerung bei drucklosem oder im Wesentlichen drucklosem Primärkreis 10.

Falls eine erneute Bremsung angefordert wird, während das ADR-Verfahren ausgeführt wird, wobei das erneute Bremsen durch Auswertung des Drucksensors 18, DS erkannt, wird die Ventilbetätigung sofort zurückgesetzt: Auslassventil 24, OS geschlossen, Einlassventil 14, IC geöffnet. Nachdem der Primärkreis 10 wieder drucklos ist, kann das ADR-Verfahren erneut starten.

Unter anderem kann das erfindungsgemäße ADR-Verfahren in drei verschiedenen Situationen ausgeführt werden, die im Folgenden einzelnen beschrieben sind, jedoch auch beliebig miteinander beliebig kombiniert werden können:
(1) ADR erfolgt unmittelbar nach einem ABS-Ereignis, wenn während dieses ABS-Ereignisses mindestens einmal ein Druckabfall aufgetreten ist und der Akkumulator 22, ACC (dadurch) teilweise gefüllt ist.
(2) ADR erfolgt, wenn das eBike-System gestartet wird und nicht bekannt ist, ob während des ausgeschalteten Zustands eine oder mehrere normale Bremsereignisse aufgetreten sind, die zu einer teilweisen Befüllung des Akkumulators 22, ACC haben führen können, zum Beispiel über eine nicht völlig vermeidbare Leckage des Auslassventils 24, OS.
(3) ADR erfolgt, wenn das eBike-System seit langer Zeit eingeschaltet ist und es gab und

(a) ein oder mehrere normale Bremsereignisse aufgetreten sind, die aufgrund einer nicht vermeidbaren Leckage des Auslassventils 14, OS zu einer teilweisen Befüllung des Akkumulators 22, ACC haben führen können, und
(b) kein ABS-Ereignis in Verbindung mit einem Druckabfall aufgetreten ist und damit keine ADR-Betätigung gemäß der Situation (1) erfolgte.

Als eine weitere mögliche Voraussetzung - neben einem drucklosen oder im Wesentlichen drucklosen Primärkreis 10 und einer der drei oben genannten Situationen - kann eine bestimmte Fahrzeuggeschwindigkeit v_{G} gesetzt werden, die überschritten sein muss, damit das ADR-Verfahren ausgeführt wird.

Ein Hauptziel für die Aufnahme der Geschwindigkeitsbedingung bei einer Ausführungsform des erfindungsgemäßen ADR-Verfahrens besteht darin, Probleme aufgrund von Ventilklickgeräuschen zu vermeiden.

Die nachfolgenden Darstellungen im Zusammenhang mit 10 Auflistungen und den Figuren 6 bis 8 beschreiben in größerem Detail die oben dargestellten Situationen (1) bis (3) und die entsprechenden Bedingungen zum Eingreifen des erfindungsgemäßen ADR-Verfahrens.

Ad (2): So zeigt Figur 6 im Überblick die Implementation des ADR-Verfahrens im Zusammenhang mit dem Startup des Systems des zu Grunde liegenden eBikes oder dergleichen.
1. Keine Druckeingabe über die Bremse, d.h. der Druck in der Primärleitung 11 ist geringer als ein vorgegebenes oberes Drucklimit.
2. Fahrzeuggeschwindigkeit v ist gegebenenfalls größer als ein vorgegebenes unteres Geschwindigkeitslimit (v_{G}), sobald das System das ADR-Verfahren aktivieren kann.
3. Teilweises Schließen des Einlassventils 14, IC mit einer Tastrate von 10 %.
4. Öffnen des Auslassventils 24, OS für eine vorbestimmte Zeitspanne.

Falls während der Entleerung des Akkumulators 22, ACC die Bremse 12 betätigt wird, zum Beispiel mit einem bestimmten Mindestdruck, ist die Entleerung des Akkumulators 22, ACC noch nicht abgeschlossen. Sobald in diesem Zustand der Bremsvorgang beendet ist, die Bremse 12 also losgelassen wird, beginnt der erfindungsgemäße ADR-Vorgang erneut, um das Entleeren des Akkumulators 22, ACC abzuschließen.

Im Zusammenhang mit Figur 6 ist zu bemerken, dass die vorgesehene Zeitspanne diejenige Zeitkonstante sein kann, die erforderlich ist, den vollständig gefüllten Akkumulator 22, ACC vollständig zu entleeren.

Ad (1): Die Figuren 7A bis 7C zeigen im Überblick das erfindungsgemäße ADR-Verfahren nach dem Auftreten eines ABS-Vorfalls.
1. Zum Absenken des Drucks am Radzylinder 15, W/C wurde ein bestimmtes Volumen durch die ABS-Steuerung in den Akkumulator 22, ACC überführt.
2. Keine Druckeingabe über die Bremse, d.h. der Druck in der Primärleitung 11 ist geringer als ein vorgegebenes oberes Drucklimit.
3. Optional kann eine minimal erforderliche Fahrzeuggeschwindigkeit zur Aktivierung des ADR-Verfahrens vorgesehen sein oder werden, um Klickgeräusche bei der Ventilaktivierung zu verhindern. Die minimal erforderliche Fahrzeuggeschwindigkeit v_{G} kann in Abhängigkeit vom Akkumulatorvolumen V_{ACC} und/oder vom Füllstand des Akkumulators 22, ACC gewählt werden.
4. Teilweises Schließen des Einlassventils 14, IC mit einer Tastrate von 10 %.
5. Öffnen des Auslassventils 24, OS zum Beispiel für eine vorbestimmte Zeitspanne t und/oder Abhängigkeit vom Akkumulatorvolumen V_{ACC} und/oder vom Füllstand des Akkumulators 22, ACC.

Falls während der Entleerung des Akkumulators 22, ACC die Bremse 12 betätigt wird, ist die Entleerung des Akkumulators 22, ACC noch nicht abgeschlossen. Sobald in diesem Zustand der Bremsvorgang beendet ist, die Bremse 12 also losgelassen wird, beginnt der erfindungsgemäße ADR-Vorgang erneut, um das Entleeren des Akkumulators 22, ACC abzuschließen, zum Beispiel mit einer Zeitspanne t von maximal 350 ms für die Öffnung des Auslassventils 24, OS.

Zu bemerken ist noch, dass der Kernalgorithmus des ABS-Verfahrens in vorteilhafter Weise zum Beispiel Mittel zum Bestimmen des Füllstands des Akkumulators 22, ACC aufweist. Zum Beispiel kann der Füllstand auf der Grundlage der Öffnungszeitspanne für das Auslassventil 24, OS, der Information in Bezug auf den Drucksensor und der Charakteristik des Drucksensors in Bezug auf Elastizität und Steifigkeit sowohl der Bremse als auch des Akkumulators 22, ACC ermittelt werden. Der ermittelte Füllstand für den Akkumulator 22, ACC ermöglicht die Anpassung der Zeitspannen für das ADR-Verfahren an die aktuellen Randbedingungen.

Ad (3): Figur 8 beschreibt die Implementation des ADR-Verfahrens im Zusammenhang mit dem Langzeitverhalten der zu Grunde liegenden Bremsanlage 1.
1. Dabei wird das ADR-Verfahren jedes Mal dann ausgeführt, wenn eine vorbestimmte vergleichsweise lange Zeitspanne, mit ausschließlich normaler Bremsaktivität, das heißt ohne ABS-Eingriffe, verstrichen ist. Das kann insbesondere bedeuten, dass nach jeder ABS-Aktivierung der Wert der bereits verstrichenen Zeit auf 0 zurückgesetzt wird. Die bereits verstrichene Zeit wird auch jedes Mal bei einem Neustart des Systems, also der Bremsanlage und/oder des eBikes auf den Wert 0 zurückgesetzt.
2. Keine Druckeingabe über die Bremse, d.h. der Druck in der Primärleitung 11 ist geringer als ein vorgegebenes oberes Drucklimit.
3. Optional wird geprüft, ob die Fahrzeuggeschwindigkeit einen vorgegebenen Wert (v_{G}) überschreitet, um dann das ADR-Verfahren zu beginnen.
4. Teilweises Schließen des Einlassventils 14, IC mit einer Tastrate von zum Beispiel 10 %.
5. Öffnen des Auslassventils 24, OS für eine vorbestimmte Zeitspanne, zum Beispiel für 150 ms, oder zum Beispiel in Abhängigkeit vom Akkumulatorvolumen V_{ACC} und/oder vom Füllstand des Akkumulators 22, ACC.

Falls während der Entleerung des Akkumulators 22, ACC die Bremse 12 betätigt wird, zum Beispiel mit einem bestimmten Druck, ist die Entleerung des Akkumulators 22, ACC noch nicht abgeschlossen. Sobald in diesem Zustand der Bremsvorgang beendet ist, die Bremse 12 also losgelassen wird, beginnt der erfindungsgemäße ADR-Vorgang erneut, um das Entleeren des Akkumulators 22, ACC abzuschließen, zum Beispiel mit einer bestimmten Zeitspanne für die Öffnung des Auslassventils 24, OS.

Zu bemerken ist, dass für sämtliche Betriebssituationen die Häufigkeit der Aktivierung des ADR-Verfahrens und/oder die Öffnungszeitspanne für das Auslassventil 24, OS in Abhängigkeit gewählt werden kann von einer etwaigen Leckage des Auslassventils 24, OS und/oder von einem vorgegebenen erlaubten und/oder tatsächlichen Füllstand des Akkumulators ACC, insbesondere zu Beginn des ADR-Verfahrens und/oder einer ABS-Situation, und/oder von einer Temperatur der Bremsflüssigkeit, eine Art der Bremsflüssigkeit, zum Beispiel eines Bremsöls und/oder einer Position der Installation der Bremsanlage und insbesondere der Hydraulikeinheit im Verhältnis zum zu Grunde liegenden Fahrzeug. Der vorgegebene erlaubte Füllstand kann definiert werden auf einen Wert, welcher geeignet ist, gesetzliche Rahmenbedingungen und/oder Performanceerfordernisse zu gewährleisten. Der Wert kann zum Beispiel aus Fahrzeugtests ermittelt werden.

Die Öffnungszeitspanne für das Auslassventil 24, OS kann zusammenhängend angewandt werden, oder in zwei oder mehr Abschnitte unterteilt mit Intervallen dazwischen, die gleich oder unterschiedlich sind. Die Art und Weise der Anwendung der Öffnungszeitspanne und ihrer gegebenenfalls Unterteilung und die Wahl der Intervalle kann abhängig gemacht werden von dem Volumen V_{ACC} des Akkumulators 22, ACC, seinem Füllstand und/oder der Öffnungszeitspanne des Auslassventils 24, OS.

## Patentansprüche

1. Verfahren zum Steuern des Betriebs einer hydraulischen Bremsanlage (1) eines Fahrzeugs und insbesondere eines mit Muskelkraft und/oderinsbesondere zusätzlich - mit Motorkraft antreibbaren Fahrzeugs, eines Elektrofahrrads, eBikes, Pedelecs oder dergleichen, bei welchem:
- geprüft wird, ob eine Entleerungsbedingung zum Entleeren eines Akkumulators (22) der Bremsanlage (1) erfüllt ist, und
- wenn die Entleerungsbedingung erfüllt ist:
- zunächst ein steuerbares Einlassventil (14) in einem Primärkreis (10) der Bremsanlage (1) über ein vorgegebenes Tastverhältnis, insbesondere von 10 %, und/oder für eine vorgegebene Zeitspanne in einen teilweise geschlossenen Zustand gesetzt wird und
- dann ein Auslassventil (24) des Akkumulators (22) - zusammenhängend oder intervallweise - für eine vorgegebene Zeitspanne geöffnet wird,
- so dass Bremsflüssigkeit aus dem Akkumulator (22) über das Auslassventil (24), den Primärkreis (10) und das Einlassventil (14) in ein Reservoir (13') eines Geberzylinders (13) des Primärkreises (10) entleert wird.

2. Verfahren nach Anspruch 1, bei welchem eine Bremsanlage (1) verwendet wird, welche:
- mit dem Primärkreis (10) ausgebildet ist, welcher stromaufwärts gelegen einen Bremsgeber (12), den Geberzylinder (13) mit Reservoir (13') und stromabwärts gelegen einen Radzylinder (15) zur Betätigung einer Radbremse (16) aufweist,
- in Primärkreis (10) eine Bremsleitung (11) aufweist, durch welche der Geberzylinder (13) und der Radzylinder (15) über das steuerbare Einlassventil (14) in der Bremsleitung (11) miteinander verbunden sind und werden, und
- mit einem Akkumulatorkreis (20) ausgebildet ist, welcher stromabwärts vom Einlassventil (14) an einem Abzweigungspunkt (25) aus der Bremsleitung (11) mit einer Akkumulatorleitung (21) abzweigt und endständig den Akkumulator (22) zur steuerbaren Aufnahme von Bremsflüssigkeit mit dem steuerbaren Auslassventil (24) zwischen dem Abzweigungspunkt (25) und dem Akkumulator (22) aufweist.

3. Verfahren nach einem der vorangehenden Ansprüche, bei welchem die Entleerungsbedingung erfüllt ist, wenn ein Druck der Bremsflüssigkeit im Primärkreis (10) mit einem atmosphärischen Umgebungsdruck übereinstimmt oder unterhalb eines vorgegebenen Schwellenwerts liegt.

4. Verfahren nach einem der vorangehenden Ansprüche, bei welchem die Entleerungsbedingung erfüllt ist, wenn - gegebenenfalls zusätzlich oder alternativ - zeitlich unmittelbar vorangehend ein Füllstand des Akkumulators (22) einen vorgegebenen Wert überschreitet.

5. Verfahren nach einem der vorangehenden Ansprüche, bei welchem die Entleerungsbedingung erfüllt ist, wenn - gegebenenfalls zusätzlich oder alternativ - zeitlich unmittelbar vorangehend die Bremsanlage (1) mit einem ABS-Vorgang betrieben wurde, bei welchem - insbesondere mindestens einmal - ein Druckabfall im Radzylinder (15) und/oder in einem stromabwärts gelegenen Teil des der Bremsleitung (11) mit Aufnahme von Bremsflüssigkeit im Akkumulator (22) bewirkt wurde.

6. Verfahren nach einem der vorangehenden Ansprüche, bei welchem die Entleerungsbedingung erfüllt ist, wenn - gegebenenfalls zusätzlich oder alternativ - das zu Grunde liegende Fahrzeug und/oder die Bremsanlage (1) neu gestartet und/oder von einem Ruhezustand in einen aktivierten Zustand versetzt wird oder wurde.

7. Verfahren nach einem der vorangehenden Ansprüche, bei welchem die Entleerungsbedingungen erfüllt ist, wenn - gegebenenfalls zusätzlich oder alternativ - seit einem letzten Zeitpunkt, bei dem die Entleerungsbedingung erfüllt war, eine vorgegebene Zeitspanne verstrichen ist und/oder eine vorgegebene Anzahl von Bremsvorgängen mit der Bremsanlage (1), insbesondere gewichtet über die Stärke und/oder Zeitspanne der Bremsvorgänge, ausgeführt wurde, insbesondere ohne dass währenddessen ein ABS-Vorgang mit der Bremsanlage (1) ausgeführt wurde.

8. Verfahren nach einem der vorangehenden Ansprüche, bei welchem die Entleerungsbedingungen erfüllt ist, wenn - insbesondere zusätzlich oder alternativ - die Geschwindigkeit des zu Grunde liegenden Fahrzeugs einen vorgegebenen Grenzwert vc überschreitet.

9. Einrichtung (100) zum Steuern des Betriebs einer hydraulischen Bremsanlage (1) eines Fahrzeugs und insbesondere eines mit Muskelkraft und/oder - insbesondere zusätzlich - mit Motorkraft antreibbaren Fahrzeugs, eines Elektrofahrrads, eBikes, Pedelecs oder dergleichen, welche eingerichtet ist und Mittel aufweist, ein Verfahren nach einem der vorangehenden Ansprüche zu veranlassen, auszuführen und/oder zu steuern.

10. Hydraulische Bremsanlage (1) eines Fahrzeugs und insbesondere eines mit Muskelkraft und/oder - insbesondere - zusätzlich mit Motorkraft antreibbaren Fahrzeugs, eines Elektrofahrrads, eBikes, Pedelecs oder dergleichen, welche eingerichtet ist und Mittel aufweist, ein Verfahren nach einem der Ansprüche 1 bis 8 zu veranlassen, auszuführen, zu steuern und/oder bei einem solchen Verfahren verwendet zu werden und welche eine Einrichtung (100) nach Anspruch 9 aufweist.

11. Hydraulische Bremsanlage (1) nach Anspruch 10, welche:
- mit einem Primärkreis (10) ausgebildet ist, welcher stromaufwärts gelegen einen Bremsgeber (12), einen Geberzylinder (13) mit Reservoir (13') und stromabwärts gelegenen einen Radzylinder (15) zur Betätigung einer Radbremse (16) aufweist,
- im Primärkreis (10) eine Bremsleitung (11) aufweist, durch welche der Geberzylinder (13) und der Radzylinder (15) über ein steuerbares Einlassventil (14) in der Bremsleitung (11) miteinander verbunden sind, und
- mit einem Akkumulatorkreis (20) ausgebildet ist, welcher stromabwärts vom Einlassventil (14) an einem Abzweigungspunkt (25) aus der Bremsleitung (11) mit einer Akkumulatorleitung (21) abzweigt und endständig einen Akkumulator (22) zur steuerbaren Aufnahme von Bremsflüssigkeit mit einem steuerbaren Auslassventil (24) zwischen dem Abzweigungspunkt (25) und dem Akkumulator (22) aufweist.

12. Fahrzeug, insbesondere mit Muskelkraft und/oder - insbesondere zusätzlich - mit Motorkraft antreibbares Fahrzeug, Elektrofahrrad, eBike, Pedelec oder dergleichen, welches eine Bremsanlage (1) nach einem der Ansprüche 10 oder 11 aufweist.

## Claims

1. Method for controlling the operation of a hydraulic brake system (1) of a vehicle and, in particular, a vehicle, an electric bicycle, ebike, pedelec or the like which can be driven by muscle power and/or, in particular additionally, by motor power, in which method:
- a check is carried out as to whether an emptying condition for emptying an accumulator (22) of the brake system (1) is met, and
- if the emptying condition is met:
- first of all, a controllable inlet valve (14) in a primary circuit (10) of the brake system (1) is set to a partially closed state via a predetermined duty cycle, in particular of 10%, and/or for a predetermined time period, and
- an outlet valve (24) of the accumulator (22) is then opened for a predetermined time period, contiguously or at intervals,
- with the result that brake fluid is emptied from the accumulator (22) via the outlet valve (24), the primary circuit (10) and the inlet valve (14) into a reservoir (13') of a master cylinder (13) of the primary circuit (10).

2. Method according to Claim 1, in which a brake system (1) is used which:
- is configured with the primary circuit (10) which has, lying upstream, a brake actuator (12), the master cylinder (13) with reservoir (13') and, lying downstream, a wheel cylinder (15) for actuating a wheel brake (16),
- has, in the primary circuit (10), a brake line (11), by way of which the master cylinder (13) and the wheel cylinder (15) are connected to one another via the controllable inlet valve (14) in the brake line (11), and
- is configured with an accumulator circuit (20) which branches off downstream of the inlet valve (14) at a branching point (25) from the brake line (11) with an accumulator line (21), and has the accumulator (22) at the end for controllably receiving brake fluid with the controllable outlet valve (24) between the branching point (25) and the accumulator (22).

3. Method according to either of the preceding claims, in which the emptying condition is met if a pressure of the brake fluid in the primary circuit (10) corresponds to an atmospheric ambient pressure or lies below a predetermined threshold value.

4. Method according to one of the preceding claims, in which the emptying condition is met if, possibly in addition or as an alternative, a filling level of the accumulator (22) exceeds a predetermined value immediately previously.

5. Method according to one of the preceding claims, in which the emptying condition is met if, possibly in addition or as an alternative, the brake system (1) has been operated immediately previously with an ABS procedure, in which a pressure drop has been brought about, in particular at least once, in the wheel cylinder (15) and/or in a downstream part of the brake line (11) by way of brake fluid being received in the accumulator (22).

6. Method according to one of the preceding claims, in which the emptying condition is met if, possibly in addition or as an alternative, the brake system (1) and/or the vehicle forming the basis have/has been restarted and/or have/has or are/is set from a rest state into an activated state.

7. Method according to one of the preceding claims, in which the emptying condition is met if, possibly in addition or as an alternative, since a last time, at which the emptying condition was met, a predetermined time period has passed and/or a predetermined number of brake operations have been carried out by way of the brake system (1), in particular weighted via the strength and/or time period of the brake operations, in particular without an ABS procedure having been carried out by way of the brake system (1) during this.

8. Method according to one of the preceding claims, in which the emptying condition is met if, in particular in addition or as an alternative, the speed of the vehicle which forms the basis exceeds a predetermined limit value v_{G}.

9. Device (100) for controlling the operation of a hydraulic brake system (1) of a vehicle and, in particular, a vehicle, an electric bicycle, ebike, pedelec or the like which can be driven by muscle power and/or, in particular additionally, by motor power, which device is configured and has means to cause, to carry out and/or to control a method according to one of the preceding claims.

10. Hydraulic brake system (1) of a vehicle and, in particular, a vehicle, an electric bicycle, ebike, pedelec or the like which can be driven by muscle power and/or, in particular, additionally by motor power, which brake system is configured and has means to cause, to carry out and/or to control a method according to one of Claims 1 to 8 and/or to be used in a method of this type, and which has a device (100) according to Claim 9.

11. Hydraulic brake system (1) according to Claim 10 which:
- is configured with a primary circuit (10) which has, lying upstream, a brake actuator (12), a master cylinder (13) with reservoir (13') and, lying downstream, a wheel cylinder (15) for actuating a wheel brake (16),
- has, in the primary circuit (10), a brake line (11), by way of which the master cylinder (13) and the wheel cylinder (15) are connected to one another via a controllable inlet valve (14) in the brake line (11), and
- is configured with an accumulator circuit (20) which branches off downstream of the inlet valve (14) at a branching point (25) from the brake line (11) with an accumulator line (21), and has an accumulator (22) at the end for controllably receiving brake fluid with a controllable outlet valve (24) between the branching point (25) and the accumulator (22).

12. Vehicle, in particular, vehicle, electric bicycle, ebike, pedelec or the like which can be driven by muscle power and/or, in particular additionally, by motor power, which vehicle has a brake system (1) according to either of Claims 10 and 11.

## Revendications

1. Procédé de commande du fonctionnement d'un système de freinage hydraulique (1) d'un véhicule et notamment d'un véhicule pouvant être entraîné par la force musculaire et/ou - notamment en plus - par la force motrice, d'un vélo électrique, d'un ebike, d'un Pedelec ou similaire, selon lequel :
- on vérifie si une condition de vidage pour vider un accumulateur (22) du système de freinage (1) est satisfaite, et
- si la condition de vidage est satisfaite :
- tout d'abord, une soupape d'admission commandable (14) dans un circuit primaire (10) du système de freinage (1) est mise dans un état partiellement fermé sur un rapport cyclique prédéterminé, notamment de 10 %, et/ou pendant une période de temps prédéterminée, et
- puis une soupape d'échappement (24) de l'accumulateur (22) est ouverte - de manière continue ou intermittente - pendant une période de temps prédéterminée,
- de telle sorte que du liquide de frein est vidé de l'accumulateur (22) par l'intermédiaire de la soupape d'échappement (24), du circuit primaire (10) et de la soupape d'admission (14) dans un réservoir (13') d'un maître-cylindre (13) du circuit primaire (10).

2. Procédé selon la revendication 1, dans lequel on utilise un système de freinage (1) qui :
- est réalisé avec le circuit primaire (10) qui présente, en amont, un transmetteur de freinage (12), le maître-cylindre (13) avec réservoir (13') et, en aval, un cylindre de roue (15) pour actionner un frein de roue (16),
- présente dans le circuit primaire (10) une conduite de frein (11) par laquelle le maître-cylindre (13) et le cylindre de roue (15) sont et seront reliés l'un à l'autre par l'intermédiaire de la soupape d'admission commandable (14) dans la conduite de frein (11), et
- est réalisé avec un circuit d'accumulateur (20) qui, en aval de la soupape d'admission (14), bifurque en un point de bifurcation (25) de la conduite de frein (11) avec une conduite d'accumulateur (21) et présente à l'extrémité l'accumulateur (22) pour la réception commandable de liquide de frein avec la soupape d'échappement commandable (24) entre le point de bifurcation (25) et l'accumulateur (22).

3. Procédé selon l'une quelconque des revendications précédentes, dans lequel la condition de vidage est satisfaite lorsqu'une pression du liquide de frein dans le circuit primaire (10) est identique à une pression atmosphérique ambiante ou inférieure à un seuil prédéterminé.

4. Procédé selon l'une quelconque des revendications précédentes, dans lequel la condition de vidage est satisfaite si - éventuellement en plus ou en variante
- immédiatement avant dans le temps, un niveau de remplissage de l'accumulateur (22) dépasse une valeur prédéterminée.

5. Procédé selon l'une quelconque des revendications précédentes, dans lequel la condition de vidage est satisfaite si - éventuellement en plus ou en variante
- le système de freinage (1) a été exploité immédiatement avant dans le temps avec une opération ABS, selon lequel - notamment au moins une fois - une chute de pression a été provoquée dans le cylindre de roue (15) et/ou dans une partie en aval de la conduite de frein (11) avec absorption de liquide de frein dans l'accumulateur (22).

6. Procédé selon l'une quelconque des revendications précédentes, dans lequel la condition de vidage est satisfaite si - éventuellement en plus ou en variante
- le véhicule sous-jacent et/ou le système de freinage (1) est ou a été redémarré et/ou passé d'un état de repos à un état activé.

7. Procédé selon l'une quelconque des revendications précédentes, dans lequel la condition de vidage est satisfaite si - éventuellement en plus ou en variante
- une période de temps prédéterminée s'est écoulée depuis un dernier moment où la condition de vidage était satisfaite et/ou un nombre prédéterminé d'opérations de freinage a été effectué avec le système de freinage (1), notamment pondéré par l'intensité et/ou la période de temps des opérations de freinage, notamment sans qu'une opération ABS ait été effectuée avec le système de freinage (1) pendant ce temps.

8. Procédé selon l'une quelconque des revendications précédentes, dans lequel les conditions de vidage sont satisfaites si - notamment en plus ou en variante - la vitesse du véhicule sous-jacent dépasse une valeur limite prédéterminée v_{G}.

9. Dispositif (100) pour commander le fonctionnement d'un système de freinage hydraulique (1) d'un véhicule et notamment d'un véhicule pouvant être entraîné par la force musculaire et/ou - notamment en plus - par la force motrice, d'un vélo électrique, d'un ebike, d'un Pedelec ou similaire, qui est adapté et présente des moyens pour initier, exécuter et/ou commander un procédé selon l'une quelconque des revendications précédentes.

10. Système de freinage hydraulique (1) d'un véhicule et notamment d'un véhicule pouvant être entraîné par la force musculaire et/ou - notamment - en plus par la force motrice, d'un vélo électrique, d'un ebike, d'un Pedelec ou similaire, qui est adapté et présente des moyens pour initier, exécuter, commander et/ou être utilisé dans un procédé selon l'une quelconque des revendications 1 à 8 et qui présente un dispositif (100) selon la revendication 9.

11. Système de freinage hydraulique (1) selon la revendication 10, qui :
- est réalisé avec un circuit primaire (10) qui présente, en amont, un transmetteur de freinage (12), un maître-cylindre (13) avec un réservoir (13') et, en aval, un cylindre de roue (15) pour l'actionnement d'un frein de roue (16),
- présente dans le circuit primaire (10), une conduite de frein (11) par laquelle le maître-cylindre (13) et le cylindre de roue (15) sont reliés entre eux par l'intermédiaire d'une soupape d'admission commandable (14) dans la conduite de frein (11), et
- est réalisé avec un circuit d'accumulateur (20) qui, en aval de la soupape d'admission (14), bifurque en un point de bifurcation (25) de la conduite de frein (11) avec une conduite d'accumulateur (21) et présente à l'extrémité un accumulateur (22) pour la réception commandable de liquide de frein avec une soupape d'échappement commandable (24) entre le point de bifurcation (25) et l'accumulateur (22).

12. Véhicule, notamment véhicule pouvant être entraîné par la force musculaire et/ou - notamment en plus - par la force motrice, vélo électrique, ebike, Pedelec ou similaire, qui présente un système de freinage (1) selon l'une quelconque des revendications 10 ou 11.
